# EUROPEAN PATENT SPECIFICATION

(11) **EP 1 530 890 B1**
(45) Date of publication and mention of the grant of the patent: **23.10.2013**
(21) Application number: 04026428.5
(22) Date of filing: 08.11.2004
(51) Int. Cl.: A01B 1/06, A01D 34/90

(54) **Portable device with anti-vibration handle for use in agriculture and gardening**
Tragbares Gerät mit gedämftem Handgriff für den Gebrauch im Garten und in der Landwirtschaft
Outil portable à manette amortie pour usage jardinier et agricole

(30) Priority: 11.11.2003 IT MI20032166
(43) Date of publication of application: 18.05.2005
(73) Proprietor: Active S.r.l., 26037 San Giovanni in Croce (Cremona) (IT)
(72) Inventor: Griffini, Alberto, 26034 Pontirolo (Cremona) (IT); Froldi, Marco, 260412 Casalmaggiore (Cremona) (IT)
(74) Representative: Robba, Pierpaolo

(56) References cited:
- EP-A- 0 294 842
- EP-A- 1 226 746
- EP-A- 1 327 502
- FR-A- 2 403 739
- US-A- 3 581 832
- US-A- 4 175 298
- US-A1- 2002 004 989

## Description

The present invention concerns in general portable power tools for use in farming and gardening works. More precisely the invention concerns a vibration dampening handgrip in a portable tool of the type comprising a motor, at least one handgrip and a transmission rod carrying at one end a cutting tool driven by such motor.

Power tools or devices of this type are for instance the bush cutters, chain pruners, hedge-trimmers, etc.

These portable equipments to be used in gardening and farming works are equipped with an endothermic motor (or in case an electric motor) located at the end opposite to the cutting tool, which cutting tool can be a disk, a cord trimming head, a blade device driven with a reciprocating motion, a chain-driven bar , etc. in accordance with the particular use of the machine.

In the following the invention will be disclosed with particular reference to a bush cutter, nevertheless its applications are in general to portable devices driven by a motor for carrying out farming works.

In the known motor driven portable machines, and particularly in bush cutters, in order to properly control the machine, the operator wears a shoulder sling that is connected to the device and bears the weight thereof, while the operator's hands rest on a handlebar equipped with two handgrips, with the control buttons (accelerator, stop buttons, etc.) located on the right handgrip.

The machine includes a motor, usually an endothermic one, a clutch, a transmission rod interposed between the motor and an end tool, for instance a cutting tool like a disk or a nylon trimming head, and a bevel gear pair for converting the rotatory motion of the drive shaft. A transmission rod is housed within an aluminium tube carrying the handlebar, and is spaced apart from the tube inner walls by means of brasses or bearings.

In these devices the motor is of a relatively simple and economic type and in the operation it imparts to the associated handgrips strong vibrations that are generated due to several causes, for instance because of the periodic irregularities of the motor, of reciprocating masses of the motor that is generally a single- cylinder engine, and of the other rotating members.

The use of the known machines is therefore both fatiguing and unhealthy because of the excessive vibrations transmitted to the operator's limbs.

US 3,581,832 discloses a portable power tool comprising an internal combustion engine connected through a tubular member to an end tool driven by said engine and provided with handle means for guiding the tool, said handle means being connected to said tubular member through at least one vibration damping bearing.

FR 2,403,739 refers to a portable working tool, especially a combustion engine driven working tool for agriculture and forestry, comprising a tool portion subjected to vibrations and connected to a handle portion through the interposition of at least one elastic insulating element.

EP 294,842 discloses a portable power tool, and more particularly a rotary cutting tool such as flexible line trimmers, lawn edgers, or brush cutters, comprising a handle provided with vibration-damping control means.

US 2002/004989 relates to portable handheld cutting tool having a drive motor and a cutting tool driven by the drive motor and further comprising a guide tube for guiding a drive shaft connecting the cutting tool to the drive motor as well as a handle fixed on the guide tube; a vibration damping element is mounted between the handle bracket and the guide tube.

The object of the present invention is to provide a tool of the above discussed type in which the handlebar and the handgrips are substantially insulated from the vibrations, that consequently are not transmitted to the operator.

According to the invention, these objects are achieved through a portable tool as claimed in claim 1 and a vibration dampening device as claimed in claim 10. Further advantageous characteristics are recited in the dependent claims.

The invention will now be disclosed with reference to the attached drawings that illustrate preferred but non limiting embodiments of the invention, in which:
Fig. 1 is a perspective view of a bush cutting device that incorporates the invention;

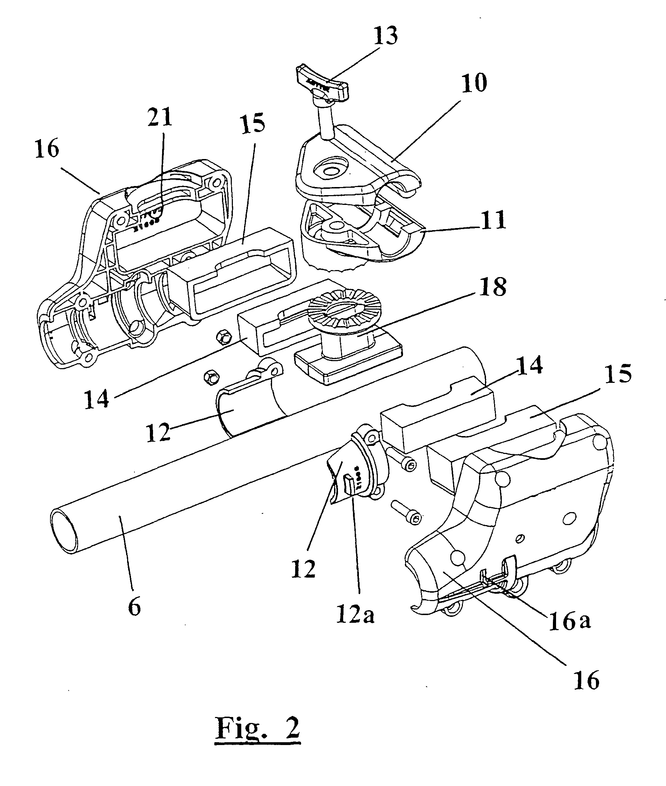

Fig. 2 is an exploded perspective view illustrating with more details the structure of an embodiment of a fastening device of the invention;
Fig. 3 is a vertical cross section of the fastening device of Fig. 2.

Throughout all the Figures the same numerical references have been used for indicating equal or substantially corresponding members.

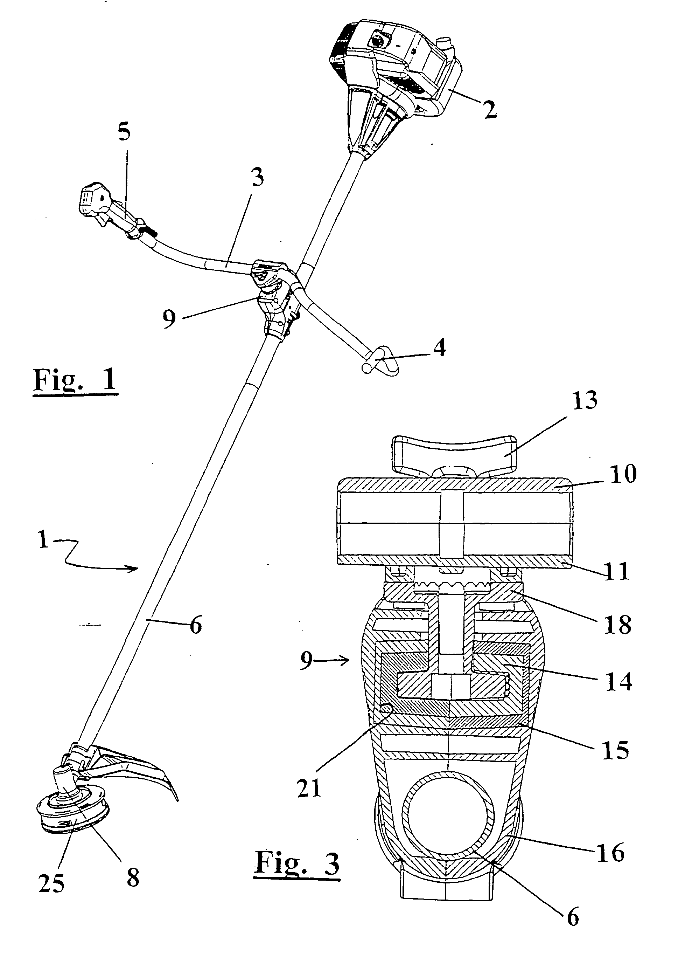

With reference to Fig. 1, in known way a bush cutting device 1 includes a motor 2 connected to a bevel gear pair 8 of a trimming head 25 through a transmission or driving rod (not shown in the Figures) housed in a transmission tube 6. A handlebar 3 comprising two handgrips 4 and 5 is mounted to the transmission tube 6 by means of a fastening device 9. The handgrips are made as properly shaped metal tubular members equipped with antis-lip coverings at their ends. On one of the handgrips, usually the right one, the controls for operating the bush cutting device are carried.

A vibration dampening fastening device 9 according to the invention is built so as to substantially dampen the vibrations transmitted from the tube 6. As illustrated with more details in Fig.s 2 and 3, a vibration dampening member 9 according to the invention comprises two half-shells or half-cases 16, 16 that together form a case or housing around the tube 6, and a clamp to which the handlebar 3 is fastened, that are joined together by a connecting element 18 also called "foot" of the fastening device. The shape and the structure of the foot in the fastening device are chosen so as to effectively damp down the forces transmitted from the handlebar when using the tool.

The connecting element 18 includes a parallelepiped-shaped base with tapered surfaces, a stem and an upper toothed portion.

The clamp for securing the handlebar to the tube is formed by two parts, respectively an upper half-clamp 10 and a lower half-clamp 11, that are tightened together through a wing nut 13. The two half-clamps 10 and 11 are formed with a concave seat or recess in which the handlebar 3 is received, such handlebar being generally formed by a metal tube, e.g. with a circular cross section.

The case half-shells 16, 16 forming the case are preferably made of a plastic material and are joined and tightened to one another by means of screws, and within such half-shells two metal hulls 12, 12 are housed that can be tightened to the tube 6 autonomously from the half-shells, through screws or the like.

The inner shape of the half-shells 16 matches the outer shape of the hulls 12 and more particularly these latter provide for two notches 12a adapted to enter corresponding slots 16a formed in the half-shells 16, so as to firmly secure the two outer half-shells 16 to the transmission tube 6.

The connecting element 18 of the fastening member is connected to the outer half-shells 16 through two pairs of elements 14, 14 and 15, 15, made of a resilient material adapted to absorb and damp the vibrations, particularly an elastomeric material such as, for instance, a rubber. In the illustrated embodiment, the elements 14, 15 have a box-like configuration cooperating with a similar shape of the base of the connecting element 18. Additionally, the hardness of the elements in the pair 14 is generally different from that of the elements in the pair 15.

The pair of inner elements 14, into which the connecting element 18 - or better the base of the stem - is fitted form an inner recess or seat with tapered surfaces that abut against and match with the tapered surfaces of the base of the connecting element, whereas the other pair of rubber elements 15 are fitted above the pair of elements 14, 14 with the outer surfaces of pair 15 in turn abutting against and matching with an inner recess 21 formed by the case 16.

Thus the connecting element 18 of the fastening device is connected to the outer case 16 - and therefore to the transmission tube 6 - through elements capable of dampening the vibrations, and particularly made of resilient materials, and preferably rubber.

Therefore, the vibrations from the tube 6 are damped by the rubber elements or hulls14,14 and 15,15 the walls of which adhere to the half-shells 16, 16, and such dampening is proportional to the inverse of the rubber elements 14 and 15.

Therefore the dampening effect can be varied or adjusted to either the machine or the operator, by varying the hardness of the rubber of the enveloping elements 14 and 15, and more precisely the harder the rubber, the greater will be the dampening effect. The shape, preferably a rectangular shape, of the base of the connecting element 18 facilitates the connection of this latter through the hulls 10 and 11 to the control handlebar 3.

This way the operator, by actuating the handlebar to steer and move the tool, applies a bending and twisting moment to the connecting element 18 that in turn applies these stresses onto the rubber hulls 14 and 15.

The parallelepiped shape of the connecting element 18 is further important since it can improve the vibration dampening along a main direction, or change the rubber deformation along a direction when the contact surface changes.

As an example, the smaller is the contact surface in a plane parallel to the axis of the tube 6, the greater will be the rubber deformation and accordingly the governability of the tool will be smaller in respect of the movement in such plane.

Therefore, before assembling the tool, the proper hardness of the elastic elements 14 and 15 will be chosen so as to impart the desired vibration dampening in the different frequency bands, thus allowing an increase of the comfort when using the tool.

Although the invention has been illustrated with reference to preferred embodiments, it is susceptible in general of other applications and changes that fall within the scope of the invention as will be evident to the skilled of the art.

## Claims

1. A portable power tool (1) for use in farming and gardening works, comprising:
a motor (2);
a tubular member (6) at least partially housing a transmission member connecting said motor (2) to an end tool (25) driven by said motor, a handlebar (3) with at least one handgrip (4,5) being fitted to said tubular member (6) through a fastening device (9);
wherein said handlebar (3) is connected to said tubular element (6) through elastic means (14, 15),
wherein said fastening device (9) comprises a case (16) fitted around said tubular element (6), and a clamp to which said handlebar (3) is secured, that are connected to each other by a connecting element (18),
**characterised in that** said connecting element (18) comprises a parallelepiped-shaped base with tapering surfaces, a stem and a toothed portion, said base being housed within said elastic means (14, 15), said arrangement being adapted to dampen the stresses coming from the handlebar when using the tool.

2. A portable tool as claimed in claim 1, **characterised in that** said elastic means comprises elastomeric materials.

3. A portable tool as claimed in claim 1, **characterised in that** said elastic means comprises a first pair of elements (14, 14) with tapering surfaces, surrounding said connecting element (18), and a second pair of elements (15, 15) surrounding said first pair of elements.

4. A portable tool as claimed in claim 3, **characterised in that** the elements of a pair (14, 14) have a different hardness from the elements of the other pair (15,15).

5. A portable tool as claimed in the preceding claim, **characterised in that** said case (16) is formed by two half-shells (16, 16) housing said connecting element (18), and by two metal hulls (12, 12) that can be autonomously tightened to said tubular element (6).

6. A portable tool as claimed in the preceding claims, **characterised in that** a clamp is provided for securing said handlebar (3) to said tube (6), comprising an upper half-clamp (10) and a lower half-clamp (11) tightened together by means of a wing nut(13).

7. A portable tool as claimed in the preceding claims, **characterised in that** said two half-clamps (10, 11) are shaped with a concave seat or recess for housing said handlebar (3).

8. A portable tool as claimed in the preceding claims, **characterised in that** said half-shells (16, 16) are of a plastic material.

9. A portable tool as claimed in the preceding claims, **characterised in that** the inner shape of said half-shells (16, 16) matches the outer shape of said hulls (12), and further provides for notches (12a) adapted to fit into corresponding slots (16a) formed in said half shells (16) to firmly secure said two outer half-shells (16) to the transmission tube 6.

10. A vibration dampening device, particularly for a portable power tool (1) to be used in farming and gardening works and comprising a handlebar (3) with at least one handgrip (4,5), said device comprising a fastening device (9) that can be secured to a tubular element (6) of said tool (1), said fastening device comprising a case (16) mounted around said tubular element (6), a clamp (10, 11) to which said handlebar (3) is secured, and a connecting element (18) connected to the outer case (16) through elements (14, 14, 15, 15) made of an elastic material adapted to dampen the vibrations, particularly an elastomeric material such as rubber,
**characterised in that** said connecting element (18) comprises a parallelepiped-shaped base with tapering surfaces, a stem and a toothed portion, said base being housed within said elastic means (14, 15), said arrangement being adapted to dampen the stresses coming from the handlebar when using the tool.

## Patentansprüche

1. Tragbares angetriebenes Werkzeug (1) für den Gebrauch bei Garten- und Landwirtschaftsarbeiten, umfassend:
- einen Motor (2) ;
- ein rohrförmiges Element (6), das einen Antriebsteil mindestens teilweise aufnimmt, der den Motor (2) mit einem durch den Motor angetriebenes Endwerkzeug (25) verbindet, wobei eine Lenkstange (3) mit mindestens einem Handgriff (4,5) an dem rohrförmigen Element (6) mittels einer Befestigungsvorrichtung (9) angebracht ist,
wobei die Lenkstange (3) mit dem rohrförmigen Element über elastische Mittel (14,15) verbunden ist, wobei die Befestigungsvorrichtung (9) ein um das rohrförmigen Element angebrachtes Gehäuse (16) und eine Klemme, an der die Lenkstange (3) befestigt ist, aufweist, wobei das Gehäuse und die Klemme durch ein Verbindungselement (18) miteinander verbunden sind, **dadurch gekennzeichnet, dass** das Verbindungselement (18) einen quaderförmigen Sockel mit sich verjüngenden Flächen, einen Schaft und ein verzahntes Teil umfasst, wobei der Sockel innerhalb der elastischen Mittel (14,15) aufgenommen ist, und diese Anordnung dazu ausgebildet ist, die beim Gebrauch des Werkzeugs von der Lenkstange herkommenden Belastungen zu dämpfen.

2. Tragbares Werkzeug nach Anspruch 1, **dadurch gekennzeichnet, dass** die elastischen Mittel Elastomermaterialien umfassen.

3. Tragbares Werkzeug nach Anspruch 1, **dadurch gekennzeichnet, dass** die elastischen Mittel ein erstes Paar von Elementen (14, 14), die sich verjüngende Flächen haben und das Verbindungselement (18) umgeben, und ein zweites Paar von Elementen (15, 15), die dieses erste Paar von Elementen umgeben, umfassen.

4. Tragbares Werkzeug nach Anspruch 3, **dadurch gekennzeichnet, dass** die Elemente eines Paars (14, 14) eine andere Härte haben als die Elemente des anderen Paars (15,15).

5. Tragbares Werkzeug nach einem der vorhergehenden Ansprüche, **dadurch gekennzeichnet, dass** das Gehäuse (16) durch zwei Halbschalen (16, 16), die das Verbindungselement (18) aufnehmen, sowie durch zwei Metallhüllen (12, 12), die an dem rohrförmigen Element (6) autonom befestigt werden können, gebildet ist.

6. Tragbares Werkzeug nach einem der vorhergehenden Ansprüche, **dadurch gekennzeichnet, dass** eine Klemme zur Befestigung der Lenkstange (3) an dem rohrförmigen Element (6) vorgesehen ist, wobei diese Klemme eine obere Halbklemme (10) und eine untere Halbklemme (11) aufweist, die aneinander mittels einer Flügelmutter (13) befestigt sind.

7. Tragbares Werkzeug nach einem der vorhergehenden Ansprüche, **dadurch gekennzeichnet, dass** die beiden Halbklemmen (10, 11) mit einem konkaven Sitz oder einer Vertiefung geformt sind, um die Lenkstange (3) aufzunehmen.

8. Tragbares Werkzeug nach einem der vorhergehenden Ansprüche, **dadurch gekennzeichnet, dass** die Halbschalen (16, 16) aus einem Kunststoffmaterial bestehen.

9. Tragbares Werkzeug nach einem der vorhergehenden Ansprüche, **dadurch gekennzeichnet, dass** die Innenform der Halbschalen (16, 16) der Außenform der Hüllen (12) entspricht, und Vorsprünge (12a) weiter vorgesehen sind, die dazu ausgebildet sind, in an den Halbschalen (16) ausgebildete entsprechende Schlitze (16a) einzugreifen, um die beiden äußeren Halbschalen (16) an dem Antriebsrohr (6) fest anzubringen.

10. Schwingungsdämpfvorrichtung, insbesondere für ein tragbares angetriebenes Werkzeug (1), das zum Gebrauch bei Garten- und Landwirtschaftsarbeiten geeignet ist und eine Lenkstange (3) mit mindestens einem Handgriff umfasst, wobei die Vorrichtung eine Befestigungsvorrichtung (9) umfasst, die an einem rohrförmigen Element (6) des Werkzeugs (1) befestigt werden kann, und wobei die Befestigungsvorrichtung aufweist: ein um das rohrförmigen Element angebrachtes Gehäuse (16), eine Klemme (10, 11), an der die Lenkstange (3) befestigt ist, und ein Verbindungselement (18), das durch aus einem zur Schwingungsdämpfung geeigneten Material, insbesondere einem Elastomermaterial wie Gummi, bestehende Elemente (14, 14, 15, 15) mit dem Außengehäuse (16) verbunden ist, **dadurch gekennzeichnet, dass** das Verbindungselement (18) einen quaderförmigen Sockel mit sich verjüngenden Flächen, einen Schaft und ein verzahntes Teil umfasst, wobei der Sockel innerhalb der elastischen Mittel (14,15) aufgenommen ist, und diese Anordnung dazu ausgebildet ist, die beim Gebrauch des Werkzeugs von der Lenkstange herkommenden Belastungen zu dämpfen.

## Revendications

1. Outil portable à moteur (1) pour usage en travaux agricoles et jardiniers, comprenant:
un moteur (2);
un élément tubulaire (6) logeant au moins partiellement un élément de transmission reliant ledit moteur (2) à un outil d'extrémité (25) entraîné par ledit moteur, un guidon (3) avec au moins une manette (4,5) étant monté sur ledit élément tubulaire (6) par un dispositif de fixation (9),
dans lequel ledit guidon (3) est relié audit élément tubulaire (6) par des moyens élastiques (14, 15), dans lequel ledit dispositif de fixation (9) comprend un boîtier (16) monté autour dudit élément tubulaire (6) et un étau auquel ledit guidon (3) est fixé, ce boîtier et cet étau étant reliés entre eux par un élément de liaison (18), **caractérisé en ce que** ledit élément de liaison (18) comprend une base en forme de parallélépipède avec des surfaces fuselées, une tige et une portion dentée, ladite base étant logée dans lesdits moyens élastiques (14, 15), ledit agencement étant apte à amortir les contraintes provenant du guidon lors de l'utilisation de l'outil.

2. Outil portable selon la revendication 1, **caractérisé en ce que** lesdits moyens élastiques comportent des matériaux élastomères.

3. Outil portable selon la revendication 1, **caractérisé en ce que** lesdits moyens élastiques comprennent un première couple d'éléments (14, 14) ayant des surfaces fuselées et entourant ledit élément de liaison (18), et un deuxième couple d'éléments (15, 15) entourant ledit premier couple d'éléments.

4. Outil portable selon la revendication 3, **caractérisé en ce que** les éléments d'un couple (14, 14) ont une dureté différente de celle des éléments de l'autre couple (15,15).

5. Outil portable selon l'une des revendications précédentes, **caractérisé en ce que** ledit boîtier (16) est formé par deux demi-coques (16, 16) logeant ledit élément de liaison (18), et par deux coques métalliques (12, 12) qui peuvent être serrés de manière autonome audit élément tubulaire (6).

6. Outil portable selon l'une des revendications précédentes, **caractérisé en ce qu'**un étau est prévu pour fixer ledit guidon (3) sur ledit élément tubulaire (6), cet étau comprenant un demi-étau supérieur (10) et un demi-étau inférieur (11) qui sont serrés ensemble au moyen d'un écrou à oreilles (13) .

7. Outil portable selon l'une des revendications précédentes, **caractérisé en ce que** lesdits deux demi-étaux (10, 11) sont façonnées avec un siège concave ou un évidement pour loger ledit guidon (3).

8. Outil portable selon l'une des revendications précédentes, **caractérisé en ce que** lesdites demi-coques (16, 16) sont en une matière plastique.

9. Outil portable selon l'une des revendications précédentes, **caractérisé en ce que** la forme intérieure desdites demi-coques (16, 16) correspond à la forme extérieure desdites coques (12), et en outre sont prévus des ergots (12a) qui sont adaptés pour s'insérer dans des fentes (16a) correspondantes formées dans lesdites demi-coques (16) pour fixer fermement lesdites deux demi-coques (16) extérieures au tube de transmission (6).

10. Dispositif amortisseur de vibrations, en particulier pour un outil portable à moteur (1) à utiliser en travaux agricoles et jardiniers et comprenant un guidon (3) avec au moins une manette (4,5), ledit dispositif comprenant un dispositif de fixation (9) qui peut être fixé à un élément tubulaire (6) dudit outil (1), ledit dispositif de fixation comprenant un boîtier (16) monté autour dudit élément tubulaire (6), un étau (10, 11) auquel ledit guidon (3) est fixé, et un élément de liaison (18) relié au boîtier extérieur (16) par des éléments (14, 14, 15, 15) en un matériau élastique apte à amortir les vibrations, en particulier en un matériau élastomère tel que le caoutchouc, **caractérisé en ce que** ledit élément de liaison (18) comprend une base en forme de parallélépipède avec des surfaces fuselées, une tige et une portion dentée, ladite base étant logée dans lesdits moyens élastiques (14, 15), ledit agencement étant apte à amortir les contraintes provenant du guidon lors de l'utilisation de l'outil.
